# EUROPEAN PATENT APPLICATION

(11) **EP 4 660 876 A1**
(43) Date of publication of application: **10.12.2025**
(21) Application number: 25152105.0
(22) Date of filing: 15.01.2025
(51) Int. Cl.: G06N 3/045, G06F 40/205, G06N 5/022

(54) **METHOD AND DEVICE FOR BUSINESS PROCESSING BASED ON AGENT**

(30) Priority: 05.06.2024 CN 202410725987
(71) Applicant: Beijing Xiaomi Mobile Software Co., Ltd., Beijing 100085 (CN)
(72) Inventor: XU, Jiaming, Beijing, 100085 (CN); SHI, Runyu, Beijing, 100085 (CN)
(74) Representative: Dehns Germany Partnerschaft mbB

(57) **Abstract**

A method for business processing based on an agent includes: recognizing (202) an operation intent of a user for a host target of the agent and generating a target text indicative of the operation intent of the user for the host target based on a recognition result; generating (204) a cue word based on the target text, inputting the cue word into an LLM model carried on the agent, performing, by the LLM model, logical reasoning based on the cue word, splitting the operation intent into at least one sub-task, and performing a task orchestration for the at least one sub-task to generate a target text sequence including a task description text corresponding to each sub-task; obtaining (206) the target text sequence output by the LLM model, and performing each sub-task contained in the target text sequence, to perform an operation corresponding to the operation intent.

## Description

### TECHNICAL FIELD

The present invention relates to the field of artificial intelligence technologies, and in particular to a method and a device for business processing based on an agent, an electronic apparatus, and a machine-readable storage medium.

### BACKGROUND

With the development of technology and the enrichment of people's needs, agents based on large language models are considered to be an important strategic direction in the field of artificial intelligence.

An agent usually refers to an entity or system that is capable of sensing its environment, making decisions and performing actions. In the field of artificial intelligence, the agent can be a program, robot, virtual character, or other type of system that is capable of obtaining information through sensors that perceive the environment, then uses algorithms and models to analyze the information, make decisions, and can perform related actions. It is often designed to solve a specific problem or perform a specific task. It can be useful in a variety of fields, such as self-driving cars, smart home systems, and game characters.

A Large Language Model (LLM) is a machine learning model capable of processing and generating natural language text, and is usually comprised of large-scale neural networks. An LLM base model has been extensively pre-trained to understand and generate text in human language, including syntactic structure, semantic content and contextual relevance. It is able to accurately simulate human language skills and perform tasks such as conversing, generating articles, and answering questions.

### SUMMARY

The invention is set out in the appended set of claims.

The present invention provides a method for business processing based on an agent, and the method includes: recognizing an operation intent of a user for a host target of the agent and generating a target text indicative of the operation intent of the user for the host target based on a recognition result; generating a cue word based on the target text, inputting the cue word into an LLM model carried on the agent, performing, by the LLM model, logical reasoning based on the cue word, splitting the operation intent into at least one sub-task, and performing a task orchestration for the at least one sub-task to generate a target text sequence including a task description text corresponding to each of the at least one sub-task; and obtaining the target text sequence output by the LLM model, and performing each sub-task contained in the target text sequence, to perform an operation corresponding to the operation intent on the host target.

Optionally, after completion of performing, by the LLM model, logical reasoning based on the cue word, the method further includes: extracting a key entity contained in the cue word, and storing the key entity as structural knowledge in a knowledge base carried on the LLM model.

Optionally, the operation intent of the user for the host target of the agent includes performing a specified processing operation for specified business data in the host target.

Optionally, the host target includes a host application and/or intelligent device.

Optionally, before generating the cue word based on the target text, the method further includes: querying whether a historical text sequence matching the target text is stored in a knowledge base carried on the LLM model; in which the historical text sequence is a text sequence including a task description text corresponding to at least one sub-task split by the LLM model based on a historical operation intent for the host target; and if a historical text sequence matching the target text is stored in the knowledge base carried on the LLM model, outputting the historical text sequence.

Optionally, after completion of performing, by the LLM model, logical reasoning based on the cue word, the method further includes: extracting a text feature from the target text, constructing a feature vector based on the extracted text feature, and storing a correspondence between the feature vector and the target text sequence in the knowledge base carried on the LLM model; and querying whether a historical text sequence matching the target text is stored in a knowledge base carried on the LLM model includes: extracting a text feature from the target text, constructing a feature vector based on the extracted text feature, and querying whether a target text sequence matching the feature vector of the target text is stored in the knowledge base carried on the LLM model.

Optionally, recognizing an operation intent of a user for a host target of the agent includes: obtaining operation information for the host target of the agent input by the user; and parsing the operation information, and recognizing the operation intent of the user for the host target of the agent from the operation information.

Optionally, the cue word includes the target text and an instruction configured to cue that the LLM model splits the operation intent into at least one sub-task, and orchestrates the at least one sub-task into a text sequence; and generating the cue word based on the target text, includes generating the instruction based on the target text and a preset instruction template, and encapsulating the instruction and the target text to generate the cue word.

Optionally, the cue word further includes a guidance cue configured to guide the LLM model to split the operation intent into at least one sub-task; and the method further includes: querying historical operation information stored in the knowledge base carried on the LLM model and semantically identical or similar to the operation information input by the user, and encapsulating the historical operation information as the guidance cue into the generated cue word.

Optionally, the LLM model is an LLM service model configured to perform the task orchestration on the operation intent of the user and obtained by using a cue word sample generated based on a preset operation intent as an input variable, using a text sequence including at least one sub-task corresponding to the preset operation intent as a label, and performing supervised fine-tuning training on a pre-trained completed LLM base model.

Optionally, each sub-task contained in the target text sequence is pre-specified in an performing order; and performing each sub-task contained in the target text sequence, includes performing each sub-task, in accordance with the performing order of each sub-task contained in the target text sequence.

Optionally, the at least one sub-task contained in the target text sequence includes a first type of sub-task corresponding to a service function provided by the LLM model; and/or, a second type of sub-task corresponding to a service function provided by the host target.

Optionally, the agent also maintains an API list; the API list contains an API corresponding to at least one service function provided by the LLM model, and an API corresponding to at least one service function provided by the host target; the task description text is call data for an API to be called, the call data contains an API identifier corresponding to the API to be called, and a call parameter corresponding to the API; and performing each sub-task contained in the target text sequence, includes: determining an API corresponding to an API identifier contained in a task description text corresponding to each sub-task contained in the target text sequence from the API list, and calling the determined API based on a call parameter contained in the task description text.

Optionally, the method further includes: in a case where it is determined that, in a process of calling an API corresponding to an API identifier contained in a task description text corresponding to each of the at least one sub-task, a call parameter associated with calling of the API is missing, outputting indication information to the user, to indicate the user to supplement the missing call parameter.

The present invention further provides a device for business processing based on an agent, and the device includes: a recognition unit configured to recognize an operation intent of a user for a host target of the agent and generate a target text indicative of the operation intent of the user for the host target based on a recognition result; a task orchestration unit configured to generate a cue word based on the target text, input the cue word into an LLM model carried on the agent, perform, by the LLM model, logical reasoning based on the cue word, split the operation intent into at least one sub-task, and perform a task orchestration for the at least one sub-task to generate a target text sequence including a task description text corresponding to each of the at least one sub-task; and a performing unit configured to obtain the target text sequence output by the LLM model, and perform each sub-task contained in the target text sequence, to perform an operation corresponding to the operation intent on the host target.

The present invention further provides an electronic apparatus, including a communication interface, a processor, a memory and a bus, and the communication interface, the processor and the memory are connected to each other through the bus.

The memory stores instructions therein, and the processor performs the method for business processing based on the agent by calling the instructions.

The present invention further provides a computer-readable storage medium storing instructions that, when executed by a processor, cause the processor to perform the method for business processing based on the agent.

The technical solutions provided by the present invention may include at least the following beneficial effects:

By the above embodiment, an operation intent of a user for a host target of the agent may be recognized, and a target text indicative of the operation intent of the user for the host target may be generated based on a recognition result; a cue word may be generated based on the target text, the cue word may be input into an LLM model carried on the agent, the LLM model may perform logical reasoning based on the cue word, split the operation intent into at least one sub-task, and perform a task orchestration for the at least one sub-task to generate a target text sequence including a task description text corresponding to each of the at least one sub-task; the target text sequence output by the LLM model may be obtained, and each sub-task contained in the target text sequence may be performed, to perform an operation corresponding to the operation intent on the host target. The present invention can perform task orchestration based on the LLM model for the user's complex operation intent, and generate at least one task corresponding to the operation intent, i.e., it can determine the operations that need to be accomplished to process the user's complex operation intent. Furthermore, by performing the at least one task, it can process the complex task indicated by the user, which can satisfy the user's complex manipulation needs and enhance the user experience.

### BRIEF DESCRIPTION OF THE DRAWINGS

The following will briefly introduce the accompanying drawings of the present invention. Obviously, the accompanying drawings described below show only example embodiments of the present invention.
FIG. 1 is a system architecture diagram of a method for business processing based on an agent according to an illustrative embodiment.
FIG. 2 is a flow chart of a method for business processing based on an agent according to an illustrative embodiment.
FIG. 3 is a structural diagram of a cue word according to an illustrative embodiment.
FIG. 4 is a schematic diagram of an electronic apparatus for business processing based on an agent according to an illustrative embodiment.
FIG. 5 is a schematic diagram of a device for business processing based on an agent according to an illustrative embodiment

### DETAILED DESCRIPTION

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with the present invention.

It should be noted that in other embodiments the steps of the corresponding method are not necessarily performed in the order illustrated and described in the present invention. In some other embodiments, its method may include more or fewer steps than the method described in the present invention.

In related art, the agent based on large language models can only process simple manipulation tasks due to their inability to understand the complex intents of a user.

For example, when the user inputs "please play music", the agent is able to call a corresponding API to play music; however, when the user inputs "please navigate to a location mentioned in a poster", the agent is unable to determine the operation required to process the user's intent, and thus is unable to respond to the user's input, as the user's intent is relatively complex.

It can be seen that in the related art, due to the limited recognition and manipulation ability of the agent, it is unable to satisfy the user's complex manipulation needs and affects the user experience.

A method for business processing based on an agent provided in the present invention is provided below through example embodiments in example application scenarios. The method processes a complex task indicated by a user by performing task orchestration for the user's complex operation intent.

In embodiments of the present invention, an operation intent of a user for a host target of the agent may be recognized, and a target text indicative of the operation intent of the user for the host target may be generated based on a recognition result; a cue word may be generated based on the target text, the cue word may be input into an LLM model carried on the agent, the LLM model may perform logical reasoning based on the cue word, split the operation intent into at least one sub-task, and perform a task orchestration for the at least one sub-task to generate a target text sequence including a task description text corresponding to each of the at least one sub-task; the target text sequence output by the LLM model may be obtained, and each sub-task contained in the target text sequence may be performed, to perform an operation corresponding to the operation intent on the host target. The present invention can perform task orchestration based on the LLM model for the user's complex operation intent, and generate at least one task corresponding to the operation intent, i.e., it can determine the operations that need to be accomplished to process the user's complex operation intent. Furthermore, by performing the at least one task, it can process the complex task indicated by the user, which can satisfy the user's complex manipulation needs and enhance the user experience.

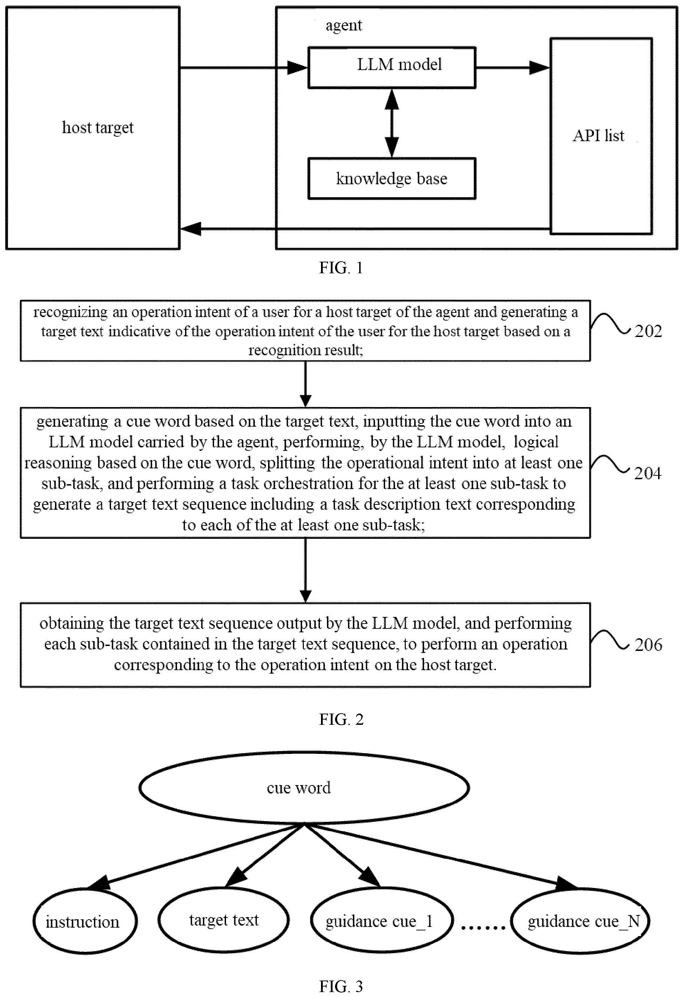

FIG. 1 is a system architecture diagram of a method for business processing based on an agent according to an illustrative embodiment. As illustrated in FIG. 1, the method may be performed by the agent. The agent may carry an LLM model, and the LLM model may be an LLM service model configured to perform the task orchestration on the operation intent of the user and obtained by using a cue word sample generated based on a preset operation intent as an input variable, using a text sequence including at least one sub-task corresponding to the preset operation intent as a label, and performing supervised fine-tuning training on a pre-trained completed LLM base model.

The agent maintains an API list; the API list contains an API corresponding to at least one service function provided by the LLM model, and an API corresponding to at least one service function provided by the host target.

The agent can confirm a type of information input by the user, and when it confirms that the information input by the user is non-operation information, it can reason about the user's question based on a question-and-answer function provided by the LLM model and output answer information.

When it confirms that the information input by the user is operation information, the agent may obtain operation information for the host target of the agent input by the user; and parse the operation information, and recognize the operation intent of the user for performing a specified processing operation on a specified business data in the host target of the agent from the operation information, and generate a target text indicative of the operation intent of the user for the host target based on a recognition result.

The agent may extract a text feature from the target text, construct a feature vector based on the extracted text feature, and query whether a target text sequence matching the feature vector of the target text is stored in the knowledge base carried on the LLM model. The historical text sequence is a text sequence including a task description text corresponding to at least one sub-task split by the LLM model based on a historical operation intent for the host target; and if a historical text sequence matching the target text is stored in the knowledge base carried on the LLM model, the historical text sequence is output.

The agent may generate an instruction configured to cue that the LLM model splits the operation intent into at least one sub-task and orchestrates the at least one sub-task into a text sequence, based on the target text and a preset instruction template; query historical operation information stored in the knowledge base carried on the LLM model and semantically identical or similar to the operation information input by the user, and encapsulate the historical operation information as the guidance cue configured to guide the LLM model to split the operation intent into the at least one sub-task with the instruction and the target text, to generate a cue word.

The agent may input the cue word into an LLM model carried on the agent, the LLM model may perform logical reasoning based on the cue word, split the operation intent into at least one sub-task, and perform a task orchestration for the at least one sub-task to generate a target text sequence including a task description text corresponding to each of the at least one sub-task.

The task description text is call data for an API to be called, the call data may contain an API identifier corresponding to the API to be called, and a call parameter corresponding to an API.

The agent may obtain the target text sequence output by the LLM model, and in accordance with the performing order of each sub-task specified in the target text sequence, determine an API corresponding to an API identifier contained in a task description text corresponding to each sub-task contained in the target text sequence from the API list, and call the determined API based on a call parameter contained in the task description text, to perform an operation corresponding to the operation intent on the host target.

In addition, in a case where it is determined that, in a process of calling an API corresponding to an API identifier contained in a task description text corresponding to each of the at least one sub-task, a call parameter associated with calling of the API is missing, the agent may also output indication information to the user, to indicate the user to supplement the missing call parameter.

The agent may also extract a text feature from the target text, construct a feature vector based on the extracted text feature, and store a correspondence between the feature vector and the target text sequence in the knowledge base carried on the LLM model.

The agent may also extract a key entity contained in the cue word, and store the key entity as structural knowledge in a knowledge base carried on the LLM model.

The host target may include a host application and/or intelligent device.

FIG. 2 is a flow chart of a method for business processing based on an agent illustrated according to an illustrative embodiment. As illustrated in FIG. 2, the agent may perform following steps.

In step 202, an operation intent of a user for a host target of the agent is recognized, and a target text indicative of the operation intent of the user for the host target is generated based on a recognition result.

The host target can refer to an environment or carrier in which the agent is located. The agent typically operates and performs tasks in a specific environment, which can be a physical environment in the real world, a virtual environment or a computer system. The host of the agent is usually can provide the input information, the ability to perform actions, and an interface to interact with the outside world, required by agent. In the present invention, the host target may include a host application and/or an intelligent device.

The host application may refer to an application software that applies the agent technology to a particular field or scenario. Specifically, the agent can be integrated into an application program as part of the application software so as to be useful in a specific application scenario.

For example, the host application may include a voice assistant, and the agent may be integrated into the application program as a part of the voice assistant, to be able to understand the voice instruction of the user and perform the corresponding task according to the needs of the user, such as querying for information, setting a reminder, playing music, and the like.

The intelligent device can refer to a hardware device that applies the agent technology to a specific field or scenario. Specifically, the agent can be hosted in an intelligent device to provide intelligent functions and services for the device. The intelligent device may have certain computing and communication capabilities to process data and interact with the user or other devices, while the agent can serve as one of the core components of these intelligent devices and are responsible for realizing intelligent functions.

For example, the intelligent device may include a smart home, where the agent, as the core of the smart home system, can control home devices, such as lights, appliances, security systems, etc., in order to realize automated management and remote control.

The agent may recognize an operation intent of the user for the host target of the agent.

For example, when the user voice inputs "find the AI industry report I downloaded on my computer last week", the agent can recognize that the operation intent of the user is to search and display the AI industry report downloaded last week on the computer of the user.

Based on this, the agent may generate a target text indicative of a search operation intent for the computer based on the recognition result.

With respect to the specific operation intent of the user for the host target, it may be set according to the actual needs, which is not limited by the present invention.

It should be noted that that the agent may also recognize a non-manipulation intent of the user, such as a question and answer intent. When the non-manipulation intent of the user is recognized, the question of the user can be reasoned based on a question-and-answer function provided by the LLM model, and answer information can be output.

In an implementation, the operation intent of the user for the host target of the agent may include performing specified processing operation for specified business data in the host target.

For example, the host target may include a smart phone, the specified business data may include photo album data in the smart phone, and the operation intent may include performing retouching and beautifying for the photo album data in the smart phone.

For another example, the host target may include a smart curtain, the specified business data may include a pull-open time point for the smart curtain, and the operation intent may include performing modifying for the pull-open time point of the smart curtain.

With respect to the specific recognition mode for recognizing the operation intent of the user, it may be set according to actual needs, which is not limited by the present invention.

In an implementation, the agent may obtain operation information input by the user for the host target of the agent; and may parse the operation information to recognize an operation intent of the user for the host target of the agent from the operation information.

Since the operation information input by the user may be relatively colloquial and life-like, the operation information input by the user can be parsed and a real operation intention of the user can be recognized from it.

For example, the operation information input by the user may include "the room is a little cold", and the agent may parse the operation information, to recognize the operation intent of the user as "turning up the temperature of the air conditioner".

In this way, the operation information input by the user is recognized and processed before being input into the model as part of a model input for reasoning, which can improve the accuracy of the subsequent reasoning of the model.

An input manner of the user may include voice input or text input, which may be set according to actual needs, which is not limited by the present invention.

The agent may generate target text indicative of the operation intent of the user for the host target based on recognition result.

The target text can refer to a structured text, thus facilitating the construction of a subsequent cue word.

For example, when the user inputs voice information: "the room is a little cold", the agent can recognize from the voice information that the operation intent of the user is to "turn up the temperature of the air conditioner" and can generate a structured text corresponding to the recognition result.

In step 204, a cue word is generated based on the target text, the cue word is input into an LLM model carried on the agent, the LLM model performs logical reasoning based on the cue word, splits the operation intent into at least one sub-task, and perform a task orchestration for the at least one sub-task to generate a target text sequence including a task description text corresponding to each of the at least one sub-task.

The agent may carry an LLM model, the LLM model may be an LLM service model obtained by supervised fine-tuning training based on a pre-trained completed LLM base model, and the LLM service model may be configured to perform the task orchestration for the operation intent of the user.

The cue word sample generated based on the preset operation intent may be used as an input variable, and the text sequence including at least one sub-task corresponding to the preset operation intent may be used as a label, and fine-tuning training may be performed on a pre-trained completed LLM base model.

In an implementation, a cue word may be generated based on the target text, and the cue word may be input into the LLM service model, the LLM service model may perform logical reasoning based on the cue word, split the operation intent of the user into at least one sub-task, perform task orchestration for the at least one sub-task, and generate a target text sequence including a task description text corresponding to each of the at least one sub-task.

With respect to a specific structure of the cue word, it can be set according to actual needs, which is not limited by the present invention.

In an implementation, the cue word may include the target text and an instruction configured to cue that the LLM model splits the operation intent into at least one sub-task, and orchestrates the at least one sub-task into a text sequence; and the agent may generate an instruction based on the target text and a preset instruction template, and encapsulate the instruction and the target text to generate the cue word.

For example, please refer to Table 1, and Table 1 shows a cue word table according to an illustrative embodiment.

**Table 1**

| | |
|---|---|
| Instruction | You are now working as a task orchestration module for an AI agent and need to split the user request into a plurality of tasks, please output it in just one line of json: [{"task": task, "id": task_id, "dep": dep_id, "args": {"arg": arg_value or <GENERATED>-dep_ id}}] |
| Target text | Navigate to the address mentioned in the poster /image1.jpg |

As illustrated in Table 1, the cue word may include an instruction and the target text. The instruction may generate the following instruction based on a preset instruction template: you are now working as a task orchestration module for an AI agent and need to split a user request into a plurality of tasks, please output it in just one line of j son: [{"task": task, "id": task_id, "dep": dep_id, "args": {"arg": arg_value or <GENERATED>-dep_id}}]. The target text may be: navigate to an address mentioned in the poster /image1.jpg.

Where *task* can be a task name; *task id* can be the task number, which can start from 0; *dep id* can be a task number of the other sub-tasks on which it depends, specifically, the input data of the task is the output data of the other sub-tasks, and when the task has no other sub-tasks on which it depends, the value of *dep_id* can be [-1]; *arg* can be data type of the input parameter of the task, *arg_value* can be the input data, and *<GENERATED>-dep id* can be the output data of other sub-tasks on which the task depends.

The agent encapsulates the instruction and the target text and may generate the cue word.

It should be noted that the cue word may contain not only the above instruction and target text, but also a guidance cue configured to guide the LLM model to split the operation intent into at least one sub-task.

In an implementation, the agent may query historical operation information stored in the knowledge base carried on the LLM model and semantically identical or similar to the operation information input by the user, and encapsulate the historical operation information as the guidance cue into the generated cue word.

The LLM model may carry the knowledge base, and the knowledge base may store the historical operation information semantically identical or similar to the operation information input by the user, and historical text sequence corresponding to the historical operation information.

For example, the operation information of the user may be "turn on the air conditioner", and the knowledge base may store a historical operation information semantically similar to this operation information: "please turn on the air conditioner".

Based on this, the historical operation information and the historical text sequence corresponding to the historical operation information may be encapsulated as a guidance cue into the cue word.

It should be noted that the knowledge base may also store a historical text semantically identical or similar to the target text, and a historical text sequence corresponding to the historical text. The agent may also encapsulate the historical text and a historical text sequence corresponding to the historical text as a guidance cue into the cue word, which is not limited by the present invention.

For example, please refer to Table 2, and Table 2 is a guidance cue table according to an illustrative embodiment.

**Table 2**

| | |
|---|---|
| Guidance cue | Historical text: Please help me navigate to an address in this image /image1.jpg; |
| | Historical text sequence: historical text sequence_1 |

As illustrated in Table 2, a historical text semantically similar to the target text in Table 1 may include "Please help me navigate to the address in this image", and the agent may encapsulate the historical text and the historical text sequence_1 corresponding to the historical text as the guidance cue_1 in the above cue word.

FIG. 3 is a structural diagram of a cue word according to an illustrative embodiment. As illustrated in FIG. 3, the guidance indication may also include other guidance indication that can be used to guide the LLM model to perform model reasoning, which may be set according to actual needs, which is not limited by the present invention. For example, the cue word may include instructions, target text, and a guidance cue_1 ...... guidance cue N.

In this way, the accuracy of model reasoning can be improved.

In an implementation, before generating the cue word based on the target text, the agent may query whether a historical text sequence matching the target text is stored in a knowledge base carried on the LLM model; in which the historical text sequence is a text sequence including a task description text corresponding to at least one sub-task split by the LLM model based on a historical operation intent for the host target; and if a historical text sequence matching the target text is stored in the knowledge base carried on the LLM model, the historical text sequence is output.

In order to improve the task processing efficiency of the agent, the correspondence between the historical text and the historical text sequence can be stored in the knowledge base carried on the LLM model; when the operation intent of the user is recognized, it is possible to query whether the knowledge base contains the historical text sequence matching the target text, and if the knowledge base contains the historical text sequence matching the target text, it is not necessary to generate a cue word based on the target text and perform logical reasoning by the LLM model, but can directly output the historical text sequence and perform each sub-task contained in the historical text sequence, which can improve the task processing efficiency of the agent.

For example, the correspondence between a historical text_1 and a historical text sequence_1, a historical text_2 and a historical text sequence _2, and a historical text_3 and a historical text sequence_3 can be stored in the knowledge base, and the agent can recognize operation intent of the user and generate the target text_1 based on the recognition result, and if the target text_1 matches successfully with the above historical text_2, then the historical text sequence_2 can be output.

In this way, it is possible to improve the task processing efficiency of the agent.

With respect to the specific way of querying the historical text sequence, it may be set according to actual needs, which is not limited by the present invention.

In an implementation, after completion of performing, by the LLM model, logical reasoning based on the cue word, the agent can also extracting a text feature from the target text, construct a feature vector based on the extracted text feature, and store a correspondence between the feature vector and the target text sequence in the knowledge base carried on the LLM model; and the agent can also extract a text feature from the target text, construct a feature vector based on the extracted text feature, and query whether a target text sequence matching the feature vector of the target text is stored in the knowledge base carried on the LLM model.

After completion of performing, by the LLM model, logical reasoning based on the cue word, the agent can store the correspondence between the target text and a target text sequence corresponding to the target text in the knowledge base, to facilitate subsequent queries.

By way of example, the agent may extract a text feature from the target text, construct a feature vector based on the extracted text feature, and store a correspondence between the feature vector and a target text sequence corresponding to the target text. When subsequently again generating the target text indicative of the operation intent of the user for host target, a feature vector corresponding to the target text may also be constructed, and a target text sequence corresponding to the target text may be obtained by querying based on the feature vector.

In this way, the target text sequence corresponding to the target text can be queried more quickly, thus improving the efficiency of the processing task of the agent.

Referring back to FIG. 2, in step 206, the target text sequence output by the LLM model is obtained, and each sub-task contained in the target text sequence is performed, to perform an operation corresponding to the operation intent on the host target.

The agent can obtain the target text sequence output by the LLM model, and perform each sub-task contained in the target text sequence, to perform an operation corresponding to the operation intent of the user on the host target.

For example, based on the above target text, the LLM model may output a target text sequence, the target text sequence may include three sub-tasks, and the three sub-tasks which may be, respectively, OCR recognition, entity recognition, and address navigation. The agent may perform OCR recognition to obtain textual information in the poster, may perform entity recognition to obtain an address entity word contained in the textual information, and may perform address navigation to pull a third-party map application to navigate to an address indicated by the address entity word.

In this way, the task orchestration may be performed on a complex intent indicated by the user, and each tack orchestrated may be performed, thus satisfying the user's complex manipulation needs and enhancing the user experience.

In an implementation, the at least one sub-task contained in the target text sequence includes a first type of sub-task corresponding to a service function provided by the LLM model; and/or, a second type of sub-task corresponding to a service function provided by the host target.

For example, among the three sub-tasks described above, a first type of sub-task corresponding to the service function provided by the LLM model may be included: OCR (Optical Character Recognition) recognition or entity recognition, and/or, a second type of sub-task corresponding to the service function provided by the host target may be included: address navigation.

OCR recognition is a technology that converts text in an image into editable and searchable text. It recognizes various forms of printed or handwritten character and converts them into computer-process able text data.

Entity recognition refers to the recognition of entities or named entities with specific meanings, such as names of people, places, organizations, dates, times, currencies, etc., from a text. These entities usually have some contextual relevance and can represent specific things, concepts or events.

In this way, it is possible to process the complex task using each service function provided by the LLM model and the host target, thus improving the user experience.

In an implementation, each sub-task contained in the target text sequence is pre-specified in a performing order; and each sub-task is performed in accordance with the performing order of each sub-task contained in the target text sequence.

The performing order of each sub-task may be pre-specified in the target text sequence, and the agent can perform each sub-task sequentially in accordance with the specified performing order.

For example, the target text sequence may have a pre-specified performing order of sub-task _1, sub-task_2, and sub-task_3, and the agent may perform the sub-task _1, sub-task_2, and sub-task_3 sequentially in accordance with the specified performing order.

In an implementation, the agent also maintains an API list; the API list contains an API corresponding to at least one service function provided by the LLM model, and an API corresponding to at least one service function provided by the host target; the task description text is call data for an API to be called, the call data contains an API identifier corresponding to the API to be called, and a call parameter corresponding to the API; and an API corresponding to an API identifier contained in a task description text corresponding to each sub-task contained in the target text sequence is determined from the API list, and the determined API is called based on a call parameter contained in the task description text.

API (Application Programming Interface), is a set of specifications that defines the interaction between software components, allowing communication and data exchange between different software systems. API defines how to request a function or service from a software component and how to respond to those requests.

In the present invention, the LLM model may provide at least one service function, e.g., the LLM model may provide an OCR recognition function. The host target may also provide at least one service function, e.g., a smart phone may provide an address search function.

The agent may maintain an API list, the list may contain an API corresponding to at least one service function provided by the LLM model, and an API corresponding to at least one service function provided by the host target.

For example, the list may contain an API corresponding to the OCR function, and an API corresponding to the address search function described above.

The task description text in the target text sequence described above may be call data for the API to be called, and the call data may contain an API identifier corresponding to the API to be called, and a call parameter corresponding to the API.

The API identifier may be an identifier of the API interface, or may be an identifier corresponding to the API interface. By way of example, the API identifier may be a task name, and a correspondence between the task name and the API to be called may be stored in the agent, and when a target task is included in the target text sequence, the agent may determine the API to be called based on the task name of the target task, and call the API to perform the target task.

The call parameter can be a content of the parameter; and the call parameter can also be an address of the parameter, and the parameter can be obtained according to the address when the API is called. The call parameter can also be output data of other sub-tasks that it depends on.

For example, the target text may be: please help me navigate to an address in this map /image1.jpg; a task description text in a target text sequence corresponding to the target text may be {"task": "optical-character-recognition", "id":0, "dep":[-1], "args": {" image":"/imagel.jpg"}, where a task name of the task can be OCR Recognition, the number of the task can be 0, the task does not depend on the output data of the other sub-tasks, a data type of the input data of the task can be an image type, and the input data of the task can be an image *image1.* The agent may, based on the OCR recognition, determine an API to be called corresponding to the task name, and perform the OCR recognition task on the image *image 1* by calling the API interface.

In an implementation, in a case where it is determined that, in a process of calling an API corresponding to an API identifier contained in a task description text corresponding to each of the at least one sub-task, a call parameter associated with calling of the API is missing, indication information is output to the user, to indicate the user to supplement the missing call parameter.

For example, when the at least one sub-task contains a sub-task for OCR recognition and an API corresponding to the sub-task is called, if it is determined that a call parameter associated with the calling, i.e., an recognition image, is missing, indication information may be output to the user to indicate the user to supplement the missing recognition image.

With respect to the specific manner of outputting the indication information to the user, it may include a voice prompting manner or a text output prompting manner, and may be set according to the actual needs, which is not limited by the present invention.

In this way, it is possible to obtain the key information that the user is missing for performing the task through active interaction, which reflects the intelligence of the agent and thus improves the user experience.

In an implementation, after completion of performing, by the LLM model, logical reasoning based on the cue word, the agent may extract a key entity contained in the cue word, and store the key entity as structural knowledge in a knowledge base carried on the LLM model.

In order to improve the accuracy of the reasoning of the LLM model, the key entity contained in the cue word can be stored as structural knowledge in the knowledge base carried on the LLM model, and when the LLM model performs logical reasoning, it can determine a logical relationship between individual entities based on the structural knowledge and perform logical reasoning based on the logical relationship, so that the accuracy of the logical reasoning can be improved.

For example, the cue word may be a cue word related to the smart home field, and the cue word may contain a key entity related to the smart home, so that when the LLM model performs logical reasoning, it can determine a logical relationship between individual smart home entities based on the structural knowledge, and perform logical reasoning based on the logical relationship.

For example, the cue word may contain the target text: "turn on the light, speaker, and air conditioner". The key entities in the cue word may be "light, speaker, and air conditioner", all three key entities may be associated with a bedroom, and the LLM model may determine that the operation intent of the user is to operate the smart home devices located in the bedroom.

In this way, the accuracy of the logical reasoning of the agent can be improved.

Corresponding to embodiments of a method for business processing based on an agent, the present invention also provides embodiments of a device for business processing based on an agent.

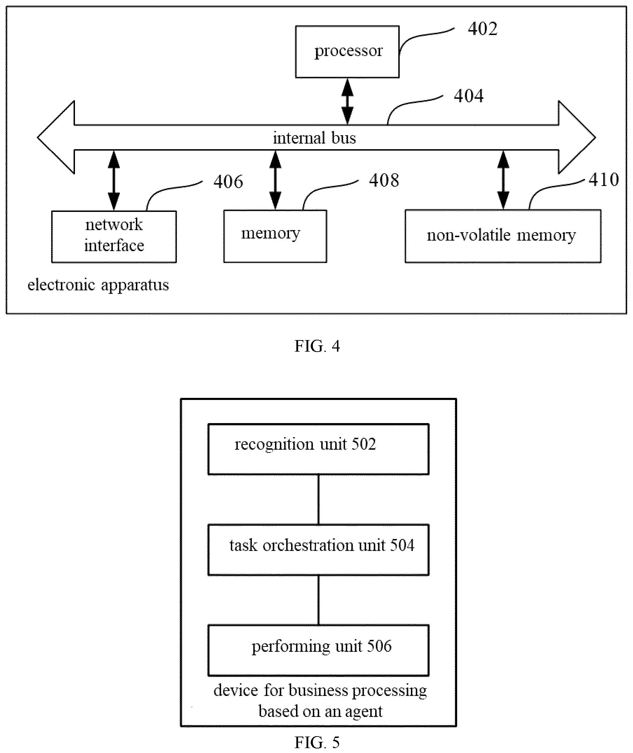

FIG. 4 is a schematic diagram of an electronic apparatus for business processing based on an agent according to an illustrative embodiment. At the hardware level, the apparatus includes a processor 402, an internal bus 404, a network interface 406, a memory 408, and a non-volatile memory 410, and may of course include other hardware required for a business. One or more embodiments of the present invention may be implemented in a software-based manner, such as reading by the processor 402 a corresponding computer program from the non-volatile memory 410 into the memory 408 and then running it. In addition, one or more embodiments of the present invention do not exclude other implementation manner, such as a logic device or a combination of hardware and software, etc., which means that the execution body of the following processing flow is not limited to the individual logic units, but may also be hardware or a logic device.

FIG. 5 is a schematic diagram of a device for business processing based on an agent according to an illustrative embodiment. The device for business processing based on an agent may be applied in the electronic apparatus illustrated in FIG. 4. The device may include: a recognition unit 502 configured to recognize an operation intent of a user for a host target of the agent and generate a target text indicative of the operation intent of the user for the host target based on a recognition result; a task orchestration unit 504 configured to generate a cue word based on the target text, input the cue word into an LLM model carried on the agent, perform, by the LLM model, logical reasoning based on the cue word, split the operation intent into at least one sub-task, and perform a task orchestration for the at least one sub-task to generate a target text sequence including a task description text corresponding to each of the at least one sub-task; and a performing unit 506 configured to obtain the target text sequence output by the LLM model, and perform each sub-task contained in the target text sequence, to perform an operation corresponding to the operation intent on the host target.

In an embodiment, the above-described device may also include an extraction unit configured to, after completion of performing, by the LLM model, logical reasoning based on the cue word, extract a key entity contained in the cue word, and store the key entity as structural knowledge in a knowledge base carried on the LLM model.

In an embodiment, the operation intent of the user for the host target of the agent may include performing a specified processing operation for a specified business data in the host target.

In an embodiment, the host target may include a host application and/or intelligent device.

In an embodiment, the above-described device may also include a query unit configured to, before generating the cue word based on the target text, query whether a historical text sequence matching the target text is stored in a knowledge base carried on the LLM model; in which the historical text sequence is a text sequence including a task description text corresponding to at least one sub-task split by the LLM model based on a historical operation intent for the host target; and if a historical text sequence matching the target text is stored in the knowledge base carried on the LLM model, output the historical text sequence.

In an embodiment, the above-described device may also include a storage unit configured to after completion of performing, by the LLM model, logical reasoning based on the cue word, extract a text feature from the target text, construct a feature vector based on the extracted text feature, and store a correspondence between the feature vector and the target text sequence in the knowledge base carried on the LLM model; and the query unit is further configured to: extract a text feature from the target text, construct a feature vector based on the extracted text feature, and query whether a target text sequence matching the feature vector of the target text is stored in the knowledge base carried on the LLM model.

In an embodiment, the above-described recognition unit 502 is further configured to: obtain operation information for the host target of the agent input by the user; and parse the operation information, and recognize the operation intent of the user for the host target of the agent from the operation information.

In an embodiment, the cue word includes the target text and an instruction configured to cue that the LLM model splits the operation intent into at least one sub-task, and orchestrates the at least one sub-task into a text sequence; and the above-described task orchestration unit 504 is further configured to: generate the instruction based on the target text and a preset instruction template, and encapsulate the instruction and the target text to generate a cue word.

In an embodiment, the cue word further includes a guidance cue configured to guide the LLM model to split the operation intent into at least one sub-task; and the query unit may be further configured to: query historical operation information stored in the knowledge base carried on the LLM model and semantically identical or similar to the operation information input by the user, and encapsulate the historical operation information as the guidance cue into the generated cue word.

In an embodiment, the LLM model may be an LLM service model configured to perform the task orchestration on the operation intent of the user and obtained by using a cue word sample generated based on a preset operation intent as an input variable, using a text sequence including at least one sub-task corresponding to the preset operation intent as a label, and performing supervised fine-tuning training on a pre-trained completed LLM base model.

In an embodiment, each sub-task contained in the target text sequence is pre-specified in an performing order; and the performing unit 506 is further configured to: perform each sub-task in accordance with the performing order of each sub-task contained in the target text sequence.

In an embodiment, the at least one sub-task contained in the target text sequence may include a first type of sub-task corresponding to a service function provided by the LLM model; and/or, a second type of sub-task corresponding to a service function provided by the host target.

In an embodiment, the agent may also maintain an API list; the API list contains an API corresponding to at least one service function provided by the LLM model, and an API corresponding to at least one service function provided by the host target; the task description text is call data for an API to be called, the call data contains an API identifier corresponding to the API to be called, and a call parameter corresponding to the API; and the performing unit 506 is further configured to: determine an API corresponding to an API identifier contained in a task description text corresponding to each sub-task contained in the target text sequence from the API list, and call the determined API based on a call parameter contained in the task description text.

In an embodiment, the device may also include an indication unit configured to: in a case where it is determined that, in a process of calling an API corresponding to an API identifier contained in a task description text corresponding to each of the at least one sub-task, a call parameter associated with calling of the API is missing, output indication information to the user, to indicate the user to supplement the missing call parameter.

The implementation process of the functions and roles of the individual units in the device is described above in the implementation process of the corresponding steps in the method, and will not be repeated here.

For device embodiments, since they basically correspond to method embodiments, it is sufficient to refer to a partial description of method embodiments for relevant content. The device embodiments described above are merely illustrative, the modules described as separate components may or may not be physically separated, and the components displayed as modules may or may not be physical modules, that is, they may be located in one place, or it can be distributed to multiple network units. Some or all of the modules can be selected according to actual needs to achieve the purpose of the solution of the present invention. They can be understood and implemented by those of ordinary skill in the art without creative work.

The system, device, or module clarified by the described embodiments may be realized by a computer chip or entity, or by a product with a certain function. A typical implementing device is a computer, and the specific form of the computer may be a personal computer, a laptop computer, a cellular telephone, a camera phone, a smart phone, a personal digital assistant, a media player, a navigation device, an e-mail sending and receiving device, a gaming console, a tablet computer, a wearable device, or a combination of any of these devices.

In a typical configuration, the computer includes one or more processors (CPUs), input/output interfaces, network interfaces, and memory.

The memory may include non-permanent memory in computer-readable media, random access memory (RAM) and/or non-volatile memory, or other forms, such as read-only memory (ROM) or flash memory (flash RAM). The memory is an example of a computer-readable medium.

The computer-readable media include permanent and non-permanent, removable and non-removable media, and can use any method or technology to implement information storage. Information may be computer-readable instructions, data structures, modules of a program, or other data. Examples of storage media for a computer include, but are not limited to, phase-change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cartridge tapes, disk storage, quantum memory, graphene-based storage media or other magnetic storage devices, or any other non-transportable medium that can be used to store information that can be accessed by computing devices. As defined herein, computer-readable media does not include transitory computer-readable media, such as modulated data signals and carriers.

It should also be noted that the terms "include", "comprise" or any other variants thereof are intended to cover non-exclusive inclusion, so that a process, method, product, or apparatus that includes a series of elements includes not only those elements, but also other elements that are not explicitly listed, or also includes elements inherent to the process, method, product, or apparatus. If there are no more restrictions, an element defined by the sentence "including a..." does not exclude the existence of other identical elements in the process, method, product or apparatus that includes the element.

The foregoing describes particular embodiments of the present invention. Other embodiments are within the scope of the appended claims. The terms used in one or more embodiments of the present invention are only for purpose of description of particular embodiments, and are not intended to limit one or more embodiments of the present invention. The singular form "a", "the" and "this" used in one or more embodiments of the present invention and the appended claims is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by one or more embodiments of the present invention to describe various information, these information should not limited by these terms. These terms are only used to distinguish the information of the same type from each other. For example, a first information may be referred to as a second information without departing from the scope of one or more embodiments of the present invention, and similarly, the second information may also be referred to as the first information. Depending on the context, the word "if' used herein may be interpreted as "when...", "upon..." or "in response to determination".

Those described above are only preferred embodiments of one or more embodiments of the present invention and are not intended to limit one or more embodiments of the present invention. Variations are possible within the scope of the invention which is defined by the claims.

The user information (including, but not limited to, user device information, user personal information, etc.) and data (including, but not limited to, data used for analysis, data stored, data displayed, etc.) involved in the present invention are all authorized by the user or fully authorized by all parties, and the collection, use and processing of the relevant data are required to comply with relevant laws, regulations and standards of the relevant countries and regions, and are provided with a corresponding operation portal for the user to choose to authorize or reject.

## Claims

1. A method for business processing based on an agent, comprising:
recognizing (202) an operation intent of a user for a host target of the agent and generating a target text indicative of the operation intent of the user for the host target based on a recognition result;
generating (204) a cue word based on the target text, inputting the cue word into a Large Language Model, LLM, model carried on the agent, performing, by the LLM model, logical reasoning based on the cue word, splitting the operation intent into at least one sub-task, and performing a task orchestration for the at least one sub-task to generate a target text sequence comprising a task description text corresponding to each of the at least one sub-task; and
obtaining (206) the target text sequence output by the LLM model, and performing each sub-task contained in the target text sequence, to perform an operation corresponding to the operation intent on the host target.

2. The method according to claim 1, wherein after completion of performing, by the LLM model, logical reasoning based on the cue word, the method further comprises:
extracting a key entity contained in the cue word, and storing the key entity as structural knowledge in a knowledge base carried on the LLM model.

3. The method according to claim 1 or 2, wherein the operation intent of the user for the host target of the agent comprises performing a specified processing operation for specified business data in the host target.

4. The method according to any one of claims 1 to 3, wherein the host target comprises a host application and/or intelligent device.

5. The method according to any one of claims 1 to 4, wherein before generating the cue word based on the target text, the method further comprises:
querying whether a historical text sequence matching the target text is stored in a knowledge base carried on the LLM model; wherein the historical text sequence is a text sequence comprising a task description text corresponding to at least one sub-task split by the LLM model based on a historical operation intent for the host target; and
in a case where a historical text sequence matching the target text is stored in the knowledge base carried on the LLM model, outputting the historical text sequence.

6. The method according to claim 5, wherein after completion of performing, by the LLM model, logical reasoning based on the cue word, the method further comprises:
extracting a text feature from the target text, constructing a feature vector based on the extracted text feature, and storing a correspondence between the feature vector and the target text sequence in the knowledge base carried on the LLM model; and
querying whether the historical text sequence matching the target text is stored in the knowledge base carried on the LLM model comprises:
extracting a text feature from the target text, constructing a feature vector based on the extracted text feature, and querying whether a target text sequence matching the feature vector of the target text is stored in the knowledge base carried on the LLM model.

7. The method according to any one of claims 1 to 6, wherein recognizing the operation intent of the user for the host target of the agent comprises:
obtaining operation information for the host target of the agent input by the user; and
parsing the operation information, and recognizing the operation intent of the user for the host target of the agent from the operation information.

8. The method according to claim 7, wherein the cue word comprises the target text and an instruction configured to cue that the LLM model splits the operation intent into at least one sub-task, and orchestrates the at least one sub-task into a text sequence; and
generating the cue word based on the target text, comprises:
generating the instruction based on the target text and a preset instruction template, and encapsulating the instruction and the target text to generate the cue word.

9. The method according to claim 8, wherein the cue word further comprises a guidance cue configured to guide the LLM model to split the operation intent into at least one sub-task; and
the method further comprises:
querying historical operation information stored in the knowledge base carried on the LLM model and semantically identical or similar to the operation information input by the user, and encapsulating the historical operation information as the guidance cue into the generated cue word.

10. The method according to any one of claims 1 to 9, wherein the LLM model is an LLM service model configured to perform the task orchestration on the operation intent of the user and obtained by using a cue word sample generated based on a preset operation intent as an input variable, using a text sequence comprising at least one sub-task corresponding to the preset operation intent as a label, and performing supervised fine-tuning training on a pre-trained completed LLM base model.

11. The method according to any one of claims 1 to 10, wherein each sub-task contained in the target text sequence is pre-specified in a performing order; and
performing each sub-task contained in the target text sequence, comprises:
performing each sub-task, in accordance with the performing order of each sub-task contained in the target text sequence.

12. The method according to any one of claims 1 to 11, wherein the at least one sub-task contained in the target text sequence comprises a first type of sub-task corresponding to a service function provided by the LLM model; and/or, a second type of sub-task corresponding to a service function provided by the host target.

13. The method according to any one of claims 1 to 12, wherein the agent maintains an API list; the API list contains an API corresponding to at least one service function provided by the LLM model, and an API corresponding to at least one service function provided by the host target; the task description text is call data for an API to be called, the call data contains an API identifier corresponding to the API to be called, and a call parameter corresponding to the API; and
performing each sub-task contained in the target text sequence, comprises:
determining an API corresponding to an API identifier contained in a task description text corresponding to each sub-task contained in the target text sequence from the API list, and calling the determined API based on a call parameter contained in the task description text.

14. The method according to claim 13, further comprising:
in a case where it is determined that, in a process of calling an API corresponding to an API identifier contained in a task description text corresponding to each of the at least one sub-task, a call parameter associated with calling of the API is missing, outputting indication information to the user, to indicate the user to supplement the missing call parameter.

15. A device for business processing based on an agent, configured to perform the method according to any one of claims 1 to 14.
